# EUROPEAN PATENT SPECIFICATION

(11) **EP 3 328 217 B1**
(45) Date of publication and mention of the grant of the patent: **31.03.2021**
(21) Application number: 16733540.5
(22) Date of filing: 30.06.2016
(51) Int. Cl.: A23P 10/20, A23L 29/238, A23L 29/244, A23L 29/269, A23L 23/10

(54) **SAVOURY CONCENTRATE COMPRISING INORGANIC SALT, FAT AND POLYSACCHARIDE GUMS**
WOHLSCHMECKENDES KONZENTRAT MIT ANORGANISCHEM SALZ, FETT UND POLYSACCHARIDGUMMIS
CONCENTRÉ SAVOUREUX COMPRENANT UN SEL INORGANIQUE, DE LA MATIÈRE GRASSE ET DES GOMMES POLYSACCHARIDIQUES

(30) Priority: 31.07.2015 EP 15179337
(43) Date of publication of application: 06.06.2018
(73) Proprietor: Unilever IP Holdings B.V., 3013 AL Rotterdam (NL)
(72) Inventor: GENÇASLAN, Alper, 74074 Heilbronn (DE); MELLEMA, Michel, 3133 AT Vlaardingen (NL); DE OLIVEIRA, Marcelo, Camilo, 74074 Heilbronn Heilbronn (DE)
(74) Representative: Tjon, Hon Kong Guno
(86) International application number: PCT/EP2016/065233
(87) International publication number: WO 2017/021069

(56) References cited:
- EP-A1- 2 229 825
- US-A1- 2008 311 251
- US-A1- 2013 236 623
- DATABASE GNPD [Online] MINTEL; September 2007 (2007-09), "Chicken Broth in Cubes", XP002747706, Database accession no. 772703
- DATABASE GNPD [Online] MINTEL; July 2012 (2012-07), Anonymous: "Vegetable Stock Pots", XP002747747, Database accession no. 1840806
- DATABASE GNPD [Online] MINTEL; April 2011 (2011-04), Anonymous: "Pork Bone Stock", XP002747748, Database accession no. 1533839
- DATABASE GNPD [Online] MINTEL; June 2014 (2014-06), Anonymous: "Chicken Stock", XP002747826, Database accession no. 2498805
- Alan Imeson ET AL: "Xanthan Gum - Chapter 17" In: "Food Stabilisers, Thickeners and Gelling Agents", 1 January 2009 (2009-01-01), XP055292331, pages 325-342,

## Description

### TECHNICAL FIELD OF THE INVENTION

The present invention relates to a savoury concentrate, more particularly a savoury concentrate that can be used in the preparation of broths, bouillons, soups, sauces, gravies etc. to improve taste as well as appearance and texture. The savoury concentrate can be provided in the form of, for instance, cubes, pellets or granulates.

The savoury concentrate of the present invention contains:
a) 22-85 wt.% inorganic salt;
b) 2-60 wt.% fat;
c) 0.2-4.8 wt.% of xanthan gum;
d) 0.2-4.8 wt.% of polysaccharide gum selected from locust bean gum, guar gum, konjac gum and combinations thereof;
e) 0-25 wt.% of glutamate component selected from glutamic acid, edible glutamate salts and combinations thereof;
f) 0-25 w.% starch component selected from native starch, pregelatinised starch, maltodextrin, modified starch and combinations thereof;
g) 0-20 wt.% of sugar selected from monosaccharides, disaccharides and combinations thereof;
h) 0-45 wt.% of vegetable matter selected from vegetables, herbs, spices and combinations thereof;
i) 0-10 wt.% water;
   optional further components;
   wherein the savoury concentrate is a granulate or a shaped article; wherein the components a) to f) together constitute at least 55 wt.% of the savoury concentrate; and
   wherein the combination of xanthan gum and the polysaccharide gum is present in the savoury concentrate in a concentration of 0.6-5 wt.%.

The present invention also provides a process of preparing the savoury concentrate, said process comprising:
- providing a savoury concentrate mixture containing inorganic salt, fat, xanthan gum, polysaccharide gum and optionally further components; and
- converting the savoury concentrate mixture into shaped articles or granules.

### BACKGROUND OF THE INVENTION

The use of bouillon cubes to provide taste in soups, gravies, sauces and other similar food products is well known. Bouillon cubes typically contain salt, sugar, fat, binders, herbs, spices, taste enhancer (e.g. glutamate) and flavouring.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

WO 2014/095196 describes a solid or semi-solid composition comprising an edible fat and an inorganic salt, wherein the composition comprises pores, and wherein the pores contain a hydrocolloid; the pores constitute from 1 to 70% of the volume of the composition. The hydrocolloid preferably comprises xanthan gum and konjac gum in a weight ratio ranging from 1.5:1 to 2.5:1. The patent examples describe the blending of a solid composition containing palm oil stearin, vegetable fat, potato starch, water and kitchen salt with a hydrogel slurry containing water, NaCl, calcium chloride dehydrate, xanthan gum and konjac gum, followed by moulding in cylinder tubes and drying.

EP-A 2 229 825 describes a packaged concentrate for preparing a bouillon, broth, soup, sauce, gravy or for use as a seasoning, said concentrate comprising:
- 20-80% water,
- 0.5-60% by weight of herbs, vegetables, fruits, meat, fish, crustaceans, or particulates thereof,
- 0.1 % to 10% of a gelling agent comprising the combination of xanthan and locust bean gum (LBG), whereby the concentration of gelling agent is to be calculated as (amount of gelling agent / (amount of gelling agent + total moisture amount),
- 3-30% (weight % based on water content of concentrate, more preferably 15-30%, most preferably 15-26%) of salt, whereby the concentration of salt is to be calculated as (amount of salt) / (amount of salt + total moisture),
   wherein the concentrate has the appearance of a gel.

US 2008/0299267 describes a packaged concentrate for preparing a bouillon, broth, soup, sauce, gravy or for use as a seasoning, said concentrate comprising:
a) 20-80% water (weight % based on total packaged concentrate);
b) 0.1% to 10% (weight % based on water content of concentrate) of a gelling agent comprising the combination of xanthan and locust bean gum (LBG);
c) 15-30% (weight % based on water content of concentrate) of salt;
d) 5-60% (weight % based on the total composition) of taste imparting components in the absence of 0.5-60% by weight of herbs, vegetables, fruits, meat, fish, crustaceans, or particulates thereof (weight % based on total packaged concentrate); and
   wherein the concentrate has the appearance of a gel.

US 2008/0311251 describes a packaged concentrate for preparing a bouillon, broth, soup, sauce, gravy or for use as a seasoning, said concentrate comprising:
- 20-80% water (weight % based on total packaged concentrate),
- 1.0-4% (weight % based on water content of concentrate) of a gelling agent comprising the combination of xanthan and guar gum, xanthan and said guar gum each being present in an amount of 20-80% on the total amount of xanthan+guar gum,
- 15-40% (weight % based on water content of concentrate) of salt,
- 0.5-60% (weight % based on the total packaged concentrate) of taste imparting components.

US 2003/0148006 describes a method of seasoning foodstuffs in which salt and liquefiable fat are applied to the foodstuff in a form applicable as a liquid and the fat is allowed to solidify, forming a salt-containing, solid layer on the foodstuff. The patent examples describe seasoning compositions containing salt, fat and thickener, including a seasoning composition that contains 0.3 wt.% xanthan gum.

### SUMMARY OF THE INVENTION

The inventors have developed a savoury concentrate, such as a bouillon cube, that can suitably be used in the preparation of bouillon, broth, soup, sauce or gravy, and that not only imparts taste and taste enhancement, but that additionally improves appearance and texture of the final product.

The savoury concentrate of the present invention contains:
a) 22-85 wt.% inorganic salt;
b) 2-60 wt.% fat;
c) 0.2-4.8 wt.% of xanthan gum;
d) 0.2-4.8 wt.% polysaccharide gum selected from locust bean gum, guar gum, konjac gum and combinations thereof;
e) 0-25 wt.% of glutamate component selected from glutamic acid, edible glutamate salts and combinations thereof;
f) 0-25 w.% starch component selected from native starch, pregelatinised starch, maltodextrin, modified starch and combinations thereof;
g) 0-20 wt.% of sugar selected from monosaccharides, disaccharides and combinations thereof;
h) 0-45 wt.% of vegetable matter selected from vegetables, herbs, spices and combinations thereof;
i) 0-10 wt.% water; wherein the savoury concentrate is a granulate or a shaped article;
   wherein the components a) to f) together constitute at least 55 wt.% of the savoury concentrate and wherein the combination of xanthan gum and the polysaccharide gum is present in the savoury concentrate in a concentration of 0.6-5 wt.%.

When used in the preparation of aqueous dishes, the savoury concentrate of the present invention offers the advantage that it imparts an opacity and velvety mouthfeel (mouth coating) that is highly appreciated and associated with homemade preparations.

The aforementioned benefits are clearly perceptible even if the savoury concentrate is applied in relatively small quantities in bouillon, broth, soup, sauce or gravy.

The presence of the combination of xanthan gum and polysaccharide gum in the savoury concentrate of the present invention enables the preparation of a savoury concentrate in the form of a cohesive article (e.g. a bouillon cube) or a robust granulate, using only a relatively low quantity of the polysaccharide gum (e.g. less than 6% by weight of the savoury concentrate).

The invention also provides a process of preparing the savoury concentrate, said process comprising:
- providing a savoury concentrate mixture containing:
   o 22-85 wt.% inorganic salt;
   o 2-60 wt.% fat;
   o 0.2-4.8 wt.% of xanthan gum;
   o 0.2-4.8 wt.% of polysaccharide gum selected from locust bean gum, guar gum, konjac gum and combinations thereof;
   o optional further components;
      wherein the combination of xanthan gum and the polysaccharide gum is present in the savoury concentrate mixture in a concentration of 0.6-5 wt.%; and
- converting the savoury concentrate mixture into shaped articles or granules.

The use of the combination of xanthan gum and polysaccharide gum in the specified concentration offers the advantage that the savoury concentrate mixture does not form a sticky mass even if said mixture has a relatively high moisture content. Thus, the savoury mixture can easily be processed and converted into shaped articles or granules.

### DETAILED DESCRIPTION OF THE INVENTION

A first aspect of the invention relates to a savoury concentrate comprising:
a) 22-85 wt.% inorganic salt;
b) 2-60 wt.% fat;
c) 0.2-4.8 wt.% of xanthan gum;
d) 0.2-4.8 wt.% polysaccharide gum selected from locust bean gum, guar gum, konjac gum and combinations thereof;
e) 0-25 wt.% of glutamate component selected from glutamic acid, edible glutamate salts and combinations thereof;
f) 0-25 w.% starch component selected from native starch, pregelatinised starch, maltodextrin, modified starch and combinations thereof;
g) 0-20 wt.% of sugar selected from monosaccharides, disaccharides and combinations thereof;
h) 0-45 wt.% of vegetable matter selected from vegetables, herbs, spices and combinations thereof;
i) 0-10 wt.% water; wherein the savoury concentrate is a granulate or a shaped article;
   wherein the components a) to f) together constitute at least 55 wt.%, preferably at least 65 wt.%, more preferably at least 75 wt.% of the savoury concentrate of the savoury concentrate; and wherein the combination of xanthan gum and the polysaccharide gum is present in the savoury concentrate in a concentration of 0.6-5 wt.%.

The term "xanthan gum" as used herein refers to a polysaccharide secreted by *Xanthomonas sp.* This polysaccharide is believed to have a main chain consisting of a linear backbone of 1,4-linked β-D-glucose and side chains of two mannose and one glucuronic acid (Garcia-Ochoa et al., Xanthan gum: production, recovery, and properties, Biotechnology Advances, Vol. 18, p.549-579.).

The term "locust bean gum" as used herein refers to a vegetable gum extracted from the seeds of the carob tree. Locust bean gum consists mainly of high-molecular-weight galactomannan polysaccharide that is composed of galactose and mannose units combined through glycosidic linkages. Locust bean gum typically contains mannose and galactose in a ratio of approximately 4:1.

The term "guar gum" as used herein refers to a vegetable gum extracted from the endosperm of guar beans. Guar gum consists mainly of high-molecular-weight galactomannan polysaccharide that is composed of galactose and mannose units combined through glycosidic linkages. Guar gum typically contains mannose and galactose in a ratio of approximately 2:1.

The term "konjac gum" as used herein refers to a polysaccharide vegetable gum extracted from the corm of the konjac plant. Konjac gum consists mainly of high-molecular-weight glucomannan polysaccharide that is composed of glucose and mannose units combined through glycosidic linkages. Konjac gum typically contains mannose and glucose in a ratio of approximately 2:1.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature.

The solid fat content at 20°C (N₂₀) can suitably be determined using ISO 8292-1 (2012) - Determination of solid fat content by pulsed NMR.

The mass weighted mean diameter of a savoury concentrate in granulated form and of particulate components of the savoury concentrate may suitably be determined using a set of sieves with different mesh sizes in case at least 80 wt.% of the material has a diameter of more than 100 µm. In case the material is a very fine powder, i.e. a powder comprising more than 20 wt.% particles with a diameter of less than 100 µm, the mass weighted mean diameter may suitably be determined by means of microscopy. The mass weighted average diameter of starch granules, for instance, can be determined from microscopic images from separate areas, each showing at least 200 starch granules. Three images are used to measure starch granules sizes. The starch granules are labelled manually, and the sizes are automatically measured in micrometers by suitable image analysis software. Further details can be found in Snyder,EM. (1984) (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673).

The savoury concentrate of the present invention typically comprises 30-70 wt.%, preferably 40-60 wt.% inorganic salt.

The fat content of the savoury concentrate typically is in the range of 3-35 wt.%, more preferably in the range of 5-30 wt.% fat. The fat contained in the savoury concentrate preferably has a solid fat content at 20°C (N20) of at least 5%, preferably in a concentration of at least 10%.

The xanthan gum is preferably applied in the savoury concentrate in a concentration of 0.4-4 wt.%, more preferably in a concentration of 0.6-3 wt.%, and most preferably in a concentration of 0.8-2.5 wt. %.

The polysaccharide gum is preferably applied in the savoury concentrate in a concentration of 0.2-4 wt.%, more preferably in a concentration of 0.3-3 wt.% and most preferably in a concentration of 0.4-2.5 wt.%.

The combination of xanthan gum and the polysaccharide gum is preferably present in the savoury concentrate in a concentration of 0.8-4 wt.%, more preferably of 1-3 wt.% and most preferably of 1.2-2.5 wt.%.

The xanthan gum and the polysaccharide are preferably applied in the savoury concentrate in a weight ratio that is in the range of 1:3 to 6:1, more preferably in the range of 1:2 to 5:1, most preferably in the range of 1:1 to 4:1.

The savoury concentrate advantageously contains at least 1 wt.% of the glutamate component. More preferably, the savoury concentrate contains 2-20 wt.% of the glutamate component.

The components a) to i) of the savoury concentrate together typically constitute at least 75 wt.%, more preferably at least 85 wt.%, most preferably at least 90 wt.% of the savoury concentrate.

The savoury concentrate of the present invention has the form of a granulate or a shaped article.

In accordance with a particularly preferred embodiment of the invention, the concentrate is a shaped article having a weight of 2-50 g, said shaped article comprising the following components:
a) 35-70 wt.%, preferably 40-60 wt.% inorganic salt;
b) 5-30 wt.%, preferably 15-25 wt.% fat, said fat having a solid fat content at 20°C (N₂₀) of at least 5%;
e) 0-20 wt.%, preferably 2-18 wt.% of the glutamate component.

The shaped article preferably has a weight in the range of 2.5-30 g, more preferably in the range of 3.0-28 g and most preferably of 3.2-24 g.

The shaped concentrate article can suitably be provided in different forms. Preferably, the article is provided in the form of a cuboid, more preferably in the form of a rectangular cuboid and most preferably in the form of a cube.

The fat contained in the shaped article preferably has a N₂₀ of at least 10%, more preferably of 25-95% and most preferably of 50-90%.

In one preferred embodiment, the savoury concentrate is a granulate having a mass weighted average diameter in the range of 0.1-5 mm, said granulate comprising the following components:
a) 35-85 wt.%, preferably 40-75 wt.% inorganic salt;
b) 3-20 wt.%, preferably 4-15 wt.% fat;
e) 2-20 wt.%, preferably 5-15 wt.% of the glutamate component.

The granulate preferably has a mass weighted average diameter in the range of 0.2-2 mm, most preferably in the range of 0.25-1.5 mm.

The fat contained in the granulate preferably has a N₂₀ of 0-60%, more preferably of 5-40% and most preferably of 10-30%.

The savoury concentrate typically contains less than 9 wt.% water. More preferably, the concentrate contains 1-8 wt.% water. Most preferably, the concentrate contains 2-7 wt.% water.

Unlike the savoury concentrate described in WO 20114/095196, the savoury concentrate of the present invention preferably does not comprise pores containing hydrocolloid attached to the wall of the pores.

The inorganic salt employed in the savoury concentrate is preferably selected from sodium chloride, potassium chloride and combinations thereof. Most preferably, the inorganic salt is sodium chloride.

The inorganic salt employed in the savoury concentrate typically has a mass weighted mean diameter in the range of 5-150 µm, more preferably of 10-100 µm.

The fat employed in the savoury concentrate preferably is a vegetable fat. The term "vegetable fat" encompasses vegetable fats that have been fractionated and/or hydrogenated. Examples of vegetable fats that may suitably be used in the savoury concentrate include palm oil, palm kernel oil, coconut oil, sunflower oil, soybean oil, rapeseed oil, linseed oil, cottonseed oil, maize oil, olive oil and combinations thereof.

Besides the inorganic salt, the fat and the polysaccharide gum, the savoury concentrate may suitably contain additional ingredients, such as starch components, taste enhancers (glutamate, yeast extract, yeast autolysate, hydrolysed vegetable protein), sugars, vegetable matter, gelatine, binders, emulsifiers (e.g. lecithin and/or monoglycerides), flavouring, colouring, minerals and vitamins.

The savoury concentrate preferably contains a starch component selected from native starch, pregelatinised starch, maltodextrin, modified starch and combinations thereof. The starch component is preferably present in the savoury concentrate in a concentration of 3-20 wt.%, more preferably of 4-18 wt.% and most preferably of 5-15 wt.%.

The combination of starch component and polysaccharide gum is preferably present in the savoury concentrate in a concentration of 5-25 wt.%, more preferably of 7-20 wt.% and most preferably of 8-15 wt.%.

The starch component employed in accordance with the present invention is selected from native starch, maltodextrin, pregelatinised starch and combinations thereof. Even more preferably, the starch is selected from native starch, pregelatinised starch and combinations thereof. Most preferably, the starch component is native starch.

The starch component employed in the savoury concentrate typically has a mass weighted mean diameter in the range of 5-200 µm, more preferably of 10-100 µm and most preferably of 12-60 µm.

The combination of xanthan gum and locust bean gum performs particularly well in the savoury concentrate of the present invention. Consequently, in a particularly preferred embodiment, the polysaccharide gum applied in the savoury concentrate is locust bean gum.

The combination of xanthan gum and guar gum also performs very well in the savoury concentrate of the present invention. Consequently, in another preferred embodiment, the polysaccharide gum applied in the savoury concentrate is guar gum.

The xanthan gum employed in accordance with the present invention typically has a molecular weight of at least 500,000 g/mol, more preferably of at least 800,000 g/mol and most preferably at least 1,000,000 g/mol. Here the molecular weight refers to molecular weight of individual polysaccharide molecules and not to a (number or weight) average molecular weight.

According to another preferred embodiment, the polysaccharide gum employed in accordance with the present invention has a molecular weight of at least 50,000 g/mol, more preferably of at least 55,000 g/mol and most preferably of 60,000 to 1,000,000 g/mol. Again, the molecular weight refers to molecular weight of individual polysaccharide molecules and not to a (number or weight) average molecular weight.

The xanthan gum is preferably applied in the savoury concentrate in the form of a powder. The particles of this powder typically contain more than 60 wt.%, more preferably at least 80 wt.% and most preferably at least 90 wt.% of the polysaccharide gum. The xanthan gum is preferably applied in the form of a powder having a mass weighted mean diameter in the range of 100-500 µm, more preferably of 120-400 µm and most preferably of 150-300 µm. The inventors have discovered that when a xanthan gum is employed having the aforementioned particles size distribution, the savoury concentrate is of higher quality and easier to produce.

The savoury concentrate may suitably comprise 0-12 wt.%, more preferably 1-10 wt.% and most preferably 2-8 wt.% of sugar. Preferably, the sugar is selected from sucrose, glucose, fructose, lactose and combinations thereof.

In accordance with another preferred embodiment, the savoury concentrate contains 0-30 wt.% of vegetable matter selected from vegetables, herbs, spices and combinations thereof. More preferably, said vegetable matter is contained in the savoury concentrate in a concentration of 0-20%, most preferably 1-10% by weight of the savoury concentrate.

Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh. The vegetable matter may be applied in the form of leafs, slices, florets, dices or other pieces.

According to another preferred embodiment, the savoury concentrate contains 0-10 wt.%, more preferably 0.5-8 wt.% and most preferably 1-5 wt.% of gelatine component, said gelatine component being selected from gelatine, hydrolysed gelatine and combinations thereof.

The savoury concentrate of the present invention preferably is a packaged savoury concentrate. The portion of the concentrate as packaged preferably has a weight (excluding packaging) of 1 g to 1 kg, preferably 2-250 g, more preferably 5-50 g. The packaging can be e.g. a container, a pouch or a wrapper.

A further aspect of the invention relates to a method of preparing a savoury product selected from a broth, a bouillon, a soup, a sauce or a gravy, said method comprising the addition of the savoury concentrate to a hot aqueous liquid having a temperature in excess of 60°C, more preferably in excess of 80°C.

Typically, the present method of preparing a savoury product comprises addition of the savoury concentrate in a concentration of at least 0.5% by weight of the savoury product. More preferably, the savoury concentrate is added in a concentration of 0.8-5%, most preferably of 1-3% by weight of the savoury product.

Yet another aspect of the invention relates to a process of preparing the savoury concentrate, said process comprising:
- providing the savoury concentrate mixture containing:
   o 22-85 wt.% inorganic salt;
   o 2-60 wt.% fat;
   ∘ 0.2-4.8 wt.% of xanthan gum;
   ∘ 0.2-4.8 wt.% of polysaccharide gum selected from locust bean gum, guar gum, konjac gum and combinations thereof;
   ∘ optional further components;
      wherein the combination of xanthan gum and the polysaccharide gum is present in the savoury concentrate mixture in a concentration of 0.6-5 wt.%; and
- converting the savoury concentrate mixture into shaped articles or granules.

According to a particularly preferred embodiment, the present process comprises incorporating into the savoury concentrate mixture xanthan gum in the form of a powder having a mass weighted average diameter of 100-500 µm, more preferably of 120-400 µm and most preferably of 150-300 µm.

The preparation of the savoury concentrate mixture preferably comprises addition of a small quantity of water in the form of an aqueous liquid. Typically, the savoury concentrate mixture is prepared by adding 0.5-10%, more preferably 0.8-5% and most preferably 1-3% of aqueous liquid by weight of the savoury concentrate mixture. The aqueous liquid employed typically contains at least 50 wt.%, more preferably at least 70 wt.% water.

The savoury concentrate mixture may suitably be converted into shaped articles or granules by means of compression. The compressing of the savoury concentrate mixture can be done using equipment 10 known in the art. Examples of known techniques that can be used to form the granules and/or shaped articles include tabletting, roller compacting, extrusion, pelletising, etc.

The invention is further illustrated by the following non-limiting examples.

### EXAMPLES

### Example 1

Bouillon cubes are prepared on the basis of the recipes (in wt.%) shown in Table 1.

**Table 1**

| | Wt.% | |
|---|---|---|
| Ingredients | 1 | A |
| Sodium chloride | 52.50 | 52.50 |
| Fat ¹ | 21.00 | 21.00 |
| Corn starch | 10.42 | 13.12 |
| Monosodium glutamate | 5.18 | 5.18 |
| Xanthan gum | 1.80 | 0.00 |
| Guar gum | 0.90 | 0.00 |
| Sugar | 2.70 | 2.70 |
| Water | 2.70 | 2.70 |
| Vegetable matter ² | 0.87 | 0.87 |
| Flavouring | 1.88 | 1.88 |
| Caramel | 0.05 | 0.05 |

| | | |
|---|---|---|
| ¹ N₂₀ = 85% ² Contains curcumin powder, parsley flakes, garlic, onion and white pepper | | |

The cubes are prepared using the following procedure:
- sodium chloride, monosodium glutamate, sugar and corn starch are introduced into a mixer and mixed for 60 seconds, at 35 Hz;
- water and caramel are added and mixed for 120s, at 35 Hz ;
- vegetable matter is added, except for the parsley flakes, and mixed for 30 seconds, at 60 Hz;
- fat powder is added and mixed of 30 seconds, at 60 Hz;
- finally, xanthan gum and guar gum are added together with parsley flakes, and mixed for 120 seconds, at 60 Hz.

Subsequently, the concentrate mixtures are discharged from the mixer and kept 2 hours at ambient temperature to allow for fat crystallization. Next, the concentrate mixtures are shaped into cubes of approximately 9.5 grams by compressing the mixture into a mould.

### Example 2

Chicken soups are prepared on the basis of the recipe shown in Table 2, using the bouillon cubes described in Example 1 (bouillon cube 1 and bouillon cube A).

**Table 2**

| Ingredients | |
|---|---|
| Water | 1.4 litres |
| Chicken breast (cubes of 2x2 cm) | 300 g |
| Potatoes (cubes of 2x2 cm) | 150 g |
| Carrots (cubes of 2x2 cm) | 100 g |
| Diced green beans (in 2 cm) | 70 g |
| Chopped onions | 60 g |
| Chopped garlic | 6 g |
| Broken dry noodles (in 4 cm) | 60 g |
| Oil | 2 spoons |
| Bouillon cubes | 2 cubes of 9.5g |

The soup is prepared as follows:
- saute the onion and garlic using part of the oil
- add the chicken breast and the remainder of the oil and stir fry the pieces of chicken meat
- add the carrots and continue stir frying for a few seconds
- add the water and to bring to boil
- add the green beans and potatoes and simmer for 10 minutes using medium heating
- add the broken noodles and boil for another 10 minutes
- add the bouillon cubes and continue boiling for 10 more minutes

The soups thus prepared are evaluated by an expert panel.

The panel evaluation shows that the soup prepared with bouillon cube 1 has a more appealing taste and texture than the soup prepared with bouillon cube A.

### Example 3

Bouillons were prepared from bouillon powders containing different levels of an added mixture of xanthan gum and locust bean gum (LBG), including a control sample without added xanthan/LBG, and were evaluated by a trained QDA panel.

The composition of the bouillon powder used is shown in Table 3.

**Table 3**

| | Wt.% |
|---|---|
| Palm stearin (IV36) | 16 |
| Potato starch (native) | 11 |
| Sugar | 2 |
| Glutamate | 15 |
| Vegetables, chicken base, herbs, flavouring | 16 |
| Salt | 40 |

Xanthan/LBG-containing bouillon powders were prepared by adding a 3:2 (w/w) mixture of xanthan gum (Ziboxan® F80, ex Deosen Biochemical Ltd, 100% < 250 µm) and LBG (Grindsted® LBG 246, at 98% <150 µm, ex Danisco) to the aforementioned bouillon powder in the concentrations indicated in Table 4.

**Table 4**

| Sample | Xanthan/LBG mixture (3:2) added (% by weight of bouillon powder) |
|---|---|
| 1 | 1 |
| 2 | 1.5 |

Bouillons containing the same amount of bouillon powder (20 g/l) and different levels of xanthan/LBG were prepared by mixing the powders into boiling water, followed by boiling under stirring for 3 more minutes.

The hot bouillons were served in 150 ml quantities in preheated china soup bowls to 14 members of a QDA panel that had previously been trained to describe the sensory characteristics of bouillons using a set of sensory descriptors. These descriptors included attributes related to appearance, odour, mouthfeel, taste, aftertaste and afterfeel. The individual attributes were scored on a scale of 0 to 15, a high score indicating that the attribute is very noticeable.

The products were offered to the panellists sequentially with intervals of 5 minutes, and were identified by a 3-digit code. Tap water and cream crackers were used by the panellists as a palate cleanser.

A mean score was calculated for each of the sensory attributes that were used to by each panellist describe the bouillons. Within the large set of sensory attributes that the QDA panel used to describe the tested samples, significant differences were observed for the sensory attributes shown in Table 5.

**Table 5**

| | **Control** | **Xanthan/LBG 1%** | **Xanthan/LBG 1.5%** |
|---|---|---|---|
| Slithery/jelly mouthfeel ¹ | 1.3 | 1.8 | 2.3 |
| Fatty mouthfeel ² | 3.1 | 3.5 | 3.7 |
| Full mouthfeel ³ | 3.8 | 4.3 | 4.1 |

| | | | |
|---|---|---|---|
| ¹ degree of slithery feeling in the mouth ² degree of fatty mouthfeel ³ degree of full, umami-like, mouthfeel | | | |

### Comparative Example

Bouillons were prepared from a bouillon powder containing added gelatin and from a control sample without added gelatin, and evaluated by a QDA panel. The procedure followed was the same as in Example 3. The amount of gelatin added was 75% by weight of bouillon powder.

Despite the very high level of gelatin addition, the QDA panel did not detect significant differences for any of the mouthfeel attributes.

## Claims

1. A savoury concentrate comprising the following components:
a) 22-85 wt.% inorganic salt;
b) 2-60 wt.% fat;
c) 0.2-4.8 wt.% of xanthan gum;
d) 0.2-4.8 wt.% polysaccharide gum selected from locust bean gum, guar gum, konjac gum and combinations thereof;
e) 0-25 wt.% of glutamate component selected from glutamic acid, edible glutamate salts and combinations thereof;
f) 0-25 w.% starch component selected from native starch, pregelatinised starch, maltodextrin, modified starch and combinations thereof;
g) 0-20 wt.% of sugar selected from monosaccharides, disaccharides and combinations thereof;
h) 0-45 wt.% of vegetable matter selected from vegetables, herbs, spices and combinations thereof;
i) 0-10 wt.% water;
wherein the savoury concentrate is a granulate or a shaped article; wherein the components a) to f) together constitute at least 55 wt.% of the savoury concentrate; and wherein the combination of xanthan gum and the polysaccharide gum is present in the savoury concentrate in a concentration of 0.6-5 wt.%.

2. Savoury concentrate according to claim 1, wherein the concentrate is a shaped article having a weight of 2-50 g, said shaped article comprising the following components:
a) 35-70 wt.% inorganic salt;
b) 5-60 wt.% fat, said fat having a solid fat content at 20°C (N₂₀) of at least 5%;
e) 0-20 wt.% of the glutamate component.

3. Savoury concentrate according to claim 1, wherein the concentrate is a granulate having a mass weighted average diameter in the range of 0.1-5 mm, said granulate comprising the following components:
a) 35-85 wt.% inorganic salt;
b) 3-20 wt.% fat;
e) 2-20 wt.% of the glutamate component.

4. Savoury concentrate according to any one of the preceding claims, the components a) to i) together constitute at least 75 wt.% of the savoury concentrate.

5. Savoury concentrate according to any one of the preceding claims, wherein the inorganic salt is selected from sodium chloride, potassium chloride and combinations thereof.
F70014WO Amended claims (clean copy)

6. Savoury concentrate according to any one of the preceding claims, wherein the savoury concentrate contains 3-20 wt.% of the starch component.

7. Savoury concentrate according to claim 6, wherein the starch component is native starch.

8. Savoury concentrate according to any one of the preceding claims, wherein the combination of xanthan gum and the polysaccharide gum is present in the savoury concentrate in a concentration of 0.8-4 wt.%.

9. Savoury concentrate according to any one of the preceding claims, wherein the polysaccharide gum is guar gum.

10. A method of preparing a savoury product selected from a broth, a bouillon, a soup, a sauce or a gravy, said method comprising the addition of a savoury concentrate according to any one of the preceding claims to a hot aqueous liquid having a temperature in excess of 60°C, more preferably in excess of 80°C.

11. A process of preparing a savoury concentrate according to any one of claims 1-9, said process comprising:
• providing a savoury concentrate mixture containing:
∘ 22-85 wt.% inorganic salt;
∘ 2-60 wt.% fat;
∘ 0.2-4.8 wt.% of xanthan gum;
∘ 0.2-4.8 wt.% of polysaccharide gum selected from locust bean gum, guar gum, konjac gum and combinations thereof;
∘ optional further components;
wherein the combination of xanthan gum and the polysaccharide gum is present in the savoury concentrate mixture in a concentration of 0.6-5 wt.%; and
• converting the savoury concentrate mixture into shaped articles or granules.

12. Process according to claim 11, wherein the process comprises compressing the savoury concentrate mixture into shaped articles or granules.

13. Process according to claim 11 or 12, wherein the process comprising incorporating xanthan gum in the form of a powder having a mass weighted average diameter of 100-500 µm.

## Patentansprüche

1. Wohlschmeckendes Konzentrat, umfassend die folgenden Bestandteile:
a) 22-85 Gew.-% anorganisches Salz;
b) 2-60 Gew.-% Fett;
c) 0,2-4,8 Gew.-% Xanthangummi;
d) 0,2-4,8 Gew.-% Polysaccharidgummi, ausgewählt aus Johannisbrotkernmehl, Guargummi, Konjakgummi und Kombinationen davon;
e) 0-25 Gew.-% Glutamatkomponente, ausgewählt aus Glutaminsäure, essbaren Glutamatsalzen und Kombinationen davon;
f) 0-25 Gew.-% Stärkekomponente, ausgewählt aus nativer Stärke, Quellstärke, Maltodextrin, modifizierter Stärke und Kombinationen davon;
g) 0 bis 20 Gew.-% Zucker, ausgewählt aus Monosacchariden, Disacchariden und Kombinationen davon;
h) 0-45 Gew.-% pflanzliches Material, ausgewählt aus Gemüse, Kräutern, Gewürzen und Kombinationen davon;
i) 0-10 Gew.-% Wasser;
wobei das wohlschmeckende Konzentrat ein Granulat oder ein Formartikel ist und die Bestandteile a) bis f) zusammen mindestens 55 Gew.-% des wohlschmeckenden Konzentrats ausmachen; und wobei die Kombination von Xanthangummi und dem Polysaccharidgummi in dem wohlschmeckenden Konzentrat in einer Konzentration von 0,6 bis 5 Gew.-% vorhanden ist.

2. Wohlschmeckendes Konzentrat nach Anspruch 1, wobei das Konzentrat ein Formartikel mit einem Gewicht von 2-50 g ist, wobei der Formartikel die folgenden Bestandteile umfasst:
a) 35-70 Gew.-% anorganisches Salz;
b) 5-60 Gew.-% Fett, wobei das Fett einen Festfettgehalt bei 20 °C (N₂₀) von mindestens 5% aufweist;
e) 0-20 Gew.-% der Glutamatkomponente.

3. Wohlschmeckendes Konzentrat nach Anspruch 1, wobei das Konzentrat ein Granulat mit einem massengewichteten durchschnittlichen Durchmesser im Bereich von 0,1-5 mm ist, wobei das Granulat die folgenden Bestandteile umfasst:
a) 35-85 Gew.-% anorganisches Salz;
b) 3-20 Gew.-% Fett;
e) 2-20 Gew.-% der Glutamatkomponente.

4. Wohlschmeckendes Konzentrat nach irgendeinem der vorhergehenden Ansprüche, wobei die Komponenten a) bis i) zusammen mindestens 75 Gew.-% des wohlschmeckenden Konzentrats ausmachen.

5. Wohlschmeckendes Konzentrat nach irgendeinem der vorhergehenden Ansprüche, wobei das anorganische Salz ausgewählt ist aus Natriumchlorid, Kaliumchlorid und Kombinationen davon.

6. Wohlschmeckendes Konzentrat nach irgendeinem der vorhergehenden Ansprüche, wobei das wohlschmeckende Konzentrat 3-20 Gew.-% der Stärkekomponente enthält.

7. Wohlschmeckendes Konzentrat nach Anspruch 6, wobei die Stärkekomponente native Stärke ist.

8. Wohlschmeckendes Konzentrat nach irgendeinem der vorhergehenden Ansprüche, wobei die Kombination von Xanthangummi und dem Polysaccharidgummi in dem wohlschmeckenden Konzentrat in einer Konzentration von 0,8-4 Gew.-% vorhanden ist.

9. Wohlschmeckendes Konzentrat nach irgendeinem der vorhergehenden Ansprüche, wobei der Polysaccharidgummi Guargummi ist.

10. Verfahren zur Herstellung eines wohlschmeckenden Produkts, ausgewählt aus einer Brühe, einer Bouillon, einer Suppe, einer Soße oder einer Bratensoße, wobei das Verfahren die Zugabe eines wohlschmeckenden Konzentrats nach irgendeinem der vorhergehenden Ansprüche zu einer heißen, wässrigen Flüssigkeit mit einer Temperatur über 60 °C, bevorzugter über 80 °C, umfasst.

11. Verfahren zur Herstellung eines wohlschmeckenden Konzentrats nach irgendeinem der Ansprüche 1-9, wobei das Verfahren umfasst:
• Bereitstellen einer wohlschmeckenden Konzentratmischung, die enthält:
∘ 22-85 Gew.-% anorganisches Salz;
∘ 2-60 Gew.-% Fett;
∘ 0,2-4,8 Gew.-% Xanthangummi;
∘ 0,2-4,8 Gew.-% Polysaccharidgummi, ausgewählt aus Johannisbrotkernmehl, Guargummi, Konjakgummi und Kombinationen davon;
∘ gegebenenfalls weitere Bestandteile;
wobei die Kombination von Xanthangummi und dem Polysaccharidgummi in der wohlschmeckenden Konzentratmischung in einer Konzentration von 0,6 bis 5 Gew.-% vorhanden ist; und
• Umwandeln der wohlschmeckenden Konzentratmischung in Formartikel oder Granulat.

12. Verfahren nach Anspruch 11, wobei das Verfahren das Komprimieren der wohlschmeckenden Konzentratmischung in Formartikel oder Granulat umfasst.

13. Verfahren nach Anspruch 11 oder 12, wobei das Verfahren die Aufnahme von Xanthangummi in Form eines Pulvers mit einem massengewichteten durchschnittlichen Durchmesser von 100-500 µm umfasst.

## Revendications

1. Concentré savoureux comprenant les constituants suivants :
a) 22-85 % en masse de sel inorganique ;
b) 2-60 % en masse de graisse ;
c) 0,2-4,8 % en masse de gomme xanthane ;
d) 0,2-4,8 % en masse de gomme de polysaccharide choisie parmi la gomme de caroube, gomme guar, gomme de konjac et combinaisons de celles-ci ;
e) 0-25 % en masse de constituant de glutamate choisi parmi l'acide glutamique, sels de glutamate comestibles et combinaisons de ceux-ci ;
f) 0-25 % en masse de constituant d'amidon choisi parmi l'amidon natif, amidon pré-gélatinisé, maltodextrine, amidon modifié et combinaisons de ceux-ci ;
g) 0-20 % en masse de sucre choisi parmi des monosaccharides, disaccharides et combinaisons de ceux-ci ;
h) 0-45 % en masse de matière végétale choisie parmi des légumes, herbes, épices et combinaisons de ceux-ci ;
i) 0-10 % en masse d'eau ;
dans lequel le concentré savoureux est un granulé ou un article façonné ; dans lequel les constituants a) à f) constituent ensemble au moins 55 % en masse du concentré savoureux ; et dans lequel la combinaison de gomme xanthane et de la gomme de polysaccharide est présente dans le concentré savoureux dans une concentration de 0,6-5 % en masse.

2. Concentré savoureux selon la revendication 1, dans lequel le concentré est un article façonné présentant une masse de 2-50 g, ledit article façonné comprenant les constituants suivants :
a) 35-70 % en masse de sel inorganique ;
b) 5-60 % en masse de graisse, ladite graisse ayant une teneur en graisse solide à 20°C (N₂₀) d'au moins 5 % ;
e) 0-20 % en masse du constituant de glutamate.

3. Concentré savoureux selon la revendication 1, dans lequel le concentré est un granulé ayant un diamètre moyen pondéré en masse dans l'intervalle de 0,1-5 mm, ledit granulé comprenant les constituants suivants :
a) 35-85 % en masse de sel inorganique ;
b) 3-20 % en masse de graisse ;
e) 2-20 % en masse du constituant de glutamate.

4. Concentré savoureux selon l'une quelconque des revendications précédentes, les constituants a) à i) constituent ensemble au moins 75 % en masse du concentré savoureux.

5. Concentré savoureux selon l'une quelconque des revendications précédentes, dans lequel le sel inorganique est choisi parmi le chlorure de sodium, chlorure de potassium et combinaisons de ceux-ci.

6. Concentré savoureux selon l'une quelconque des revendications précédentes, dans lequel le concentré savoureux contient 3-20 % en masse du constituant d'amidon.

7. Concentré savoureux selon la revendication 6, dans lequel le constituant d'amidon est l'amidon natif.

8. Concentré savoureux selon l'une quelconque des revendications précédentes, dans lequel la combinaison de gomme xanthane et de la gomme de polysaccharide est présente dans le concentré savoureux dans une concentration de 0,8-4 % en masse.

9. Concentré savoureux selon l'une quelconque des revendications précédentes, dans lequel la gomme de polyssacharide est la gomme guar.

10. Procédé de préparation d'un produit savoureux choisi parmi un brouet, un bouillon, une soupe, une sauce ou un jus de viande, ledit procédé comprenant l'addition d'un concentré savoureux selon l'une quelconque des revendications précédentes à un liquide aqueux chaud ayant une température en excès de 60°C, encore mieux en excès de 80°C.

11. Procédé de préparation d'un concentré savoureux selon l'une quelconque des revendications 1-9, ledit procédé comprenant :
. la fourniture d'un mélange de concentré savoureux contenant :
∘ 22-85 % en masse de sel inorganique ;
∘ 2-60 % en masse de graisse ;
∘ 0,2-4,8 % en masse de gomme xanthane ;
∘ 0,2-4,8 % en masse de gomme de polysaccharide choisie parmi la gomme de caroube, gomme guar, gomme de konjac et combinaisons de celles-ci ;
∘ éventuellement d'autres constituants ;
dans lequel la combinaison de gomme xanthane et de la gomme de polyssacharide est présente dans le mélange de concentré savoureux dans une concentration de 0,6-5 % en masse ; et
• la conversion du mélange de concentré savoureux en articles façonnés ou granulés.

12. Procédé selon la revendication 11, dans lequel le procédé comprend la compression du mélange de concentré savoureux en article façonnés ou granulés.

13. Procédé selon la revendication 11 ou 12, dans lequel le procédé comprend l'incorporation de gomme xanthane dans la forme d'une poudre ayant un diamètre moyen pondéré en masse de 100-500 µm.
